**Europäisches Patentamt**

**European Patent Office**

**Office européen des brevets**

(19)

(11) Veröffentlichungsnummer : **0 363 764 B1**

(12) # EUROPÄISCHE PATENTSCHRIFT

(45) Veröffentlichungstag der Patentschrift :
**19.02.92 Patentblatt 92/08**

(51) Int. Cl.$^5$ : **F16M 11/02**

(21) Anmeldenummer : **89118150.5**

(22) Anmeldetag : **30.09.89**

(54) Einrichtung zur Befestigung eines Stativkopfes am Mittelteil eines Statives.

(30) Priorität : **05.10.88 DE 3833838**
**21.10.88 DE 3835928**

(43) Veröffentlichungstag der Anmeldung :
**18.04.90 Patentblatt 90/16**

(45) Bekanntmachung des Hinweises auf die
Patenterteilung :
**19.02.92 Patentblatt 92/08**

(84) Benannte Vertragsstaaten :
**BE CH DE ES FR GB LI LU NL**

(56) Entgegenhaltungen :
**CH-A- 445 201**
**FR-A- 509 657**
**GB-A- 334 090**
**US-A- 2 496 519**

(73) Patentinhaber : **Cullmann GmbH**
**Waldstrasse 12**
**W-8506 Langenzenn/Laubendorf (DE)**

(72) Erfinder : **Gubesch, Werner**
**Tannenstrasse 39**
**W-8506 Langenzenn-Horbach (DE)**

(74) Vertreter : **LOUIS, PÖHLAU, LOHRENTZ &**
**SEGETH**
**Kesslerplatz 1 Postfach 3055**
**W-8500 Nürnberg-1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 363 764 B1

## Beschreibung

Die Erfindung betrifft eine Einrichtung zur verdrehsicheren Befestigung eines Stativkopfes an einem Mittelteil eines Statives, wobei der Stativkopf im zusammengebauten Zustand mit seiner Grundfläche auf einer stirnseitigen Endfläche des Mittelteils anliegt, und die stirnseitige Endfläche des Mittelteiles anliegt und der Stativkopfes und das Mittelteil mittels einer Überwurfmutter miteinander verbind- und arretierbar sind, wobei die Überwurfmutter die stirnseitige Endfläche und die Grundfläche umgreift und an einem der zu verbindenden Teile drehbar gelagert, sowie mit einem korrespondierenden Gewindeabschnitt des anderen Teiles verschraubbar ist.

Eine Einrichtung der eingangs genannten Art, bei welcher das Mittelteil durch einen Sockel gebildet ist, ist aus der GB-A 334 090 bekannt. Bei dieser bekannten Einrichtung geht es darum, die Reibung zwischen einer Gelenkkugel und dem besagten Sockel ausreichend groß zu gestalten, um eine zuverlässige Fixierung zwischen Gelenkkugel und Sockel zu gewährleisten, wenn die Überwurfmutter festgeschraubt worden ist. Diese Fixierung kann jedoch insbesondere nach einer längeren Benutzungsdauer der Einrichtung infolge Abnutzung noch Wünsche offen lassen.

Der Erfindung liegt die Aufgabe zugrunde, eine Einrichtung der oben beschriebenen Art zu schaffen, mit welcher ein Stativkopf zeit- und kraftsparend verdrehsicher mit dem Mittelteil eines Statives verbindbar ist.

Diese Aufgabe wird erfindungsgemäss dadurch gelöst, daß die stirnseitige Endfläche des Mittelteiles und die Grundfläche des Stativkopfes jeweils mit mindestens einer Erhebung bzw. Einsenkung ausgebildet sind, die mit Abstand von der Längsmittellinie des Mittelteiles angeordnet sind und im zusammengebauten Zustand ineinandergreifen.

Um die verdrehsichere Verbindung zwischen dem Stativkopf und dem Mittelteil sehr zeitsparend durchführen zu können, weisen die korrespondierenden Gewindeabschnitte der Überwurfmutter und des Stativkopfes bzw. des Mittelteils des Statives vorzugsweise eine relativ grosse Gewindesteigung auf, so dass es mit wenigen Umdrehungen der Überwurfmutter möglich ist, die besagte Verbindung herzustellen. Die Überwurfmutter und die korrespondierenden Gewindeabschnitte sind gleichzeitig dazu vorgesehen, im zusammengebauten Zustand des Stativkopfes und des Mittelteils des Statives die mindestens eine Erhebung in die mindestens eine zugehörige Einsenkung hineinzubewegen, wodurch zwischen dem Mittelteil und dem Stativkopf die Verdrehsicherung gewährleistet wird.

Als zweckmässig hat es sich erwiesen, wenn der Gewindeabschnitt der Überwurfmutter als Innengewindeabschnitt und der des Stativkopfes als Aussengewindeabschnitt ausgebildet sind. Durch eine solche Ausbildung der Einrichtung sind die korrespondierenden Gewindeabschnitte der Überwurfmutter und des Stativkopfes im verdrehsicher miteinander verbundenen Zustand des Mittelteiles und des Stativkopfes gegen eine Berührung von aussen geschützt, so dass eine Verletzungsgefahr durch die Gewindeabschnitte ausgeschlossen ist. Anstelle von mit Gewindeabschnitten versehenen Überwurfmuttern und Stativköpfen können die beiden zuletzt genannten Teile selbstverständlich auch nach Art von Bajonettverschlüssen oder Schnapp-Rastverbindungen ausgebildet sein. Demselben Zweck eines Berührungsschutzes dient es, wenn der Aussengewindeabschnitt des Stativkopfes durch einen umlaufenden Kragen überdeckt ist, der vom Aussengewindeabschnitt durch einen umlaufenden Ringspalt beabstandet ist. Durch den umlaufenden Kragen wird somit eine durch den Aussengewindeabschnitt des Stativkopfes mögliche Verletzungsgefahr im nicht zusammengebauten Zustand der Einrichtung verhindert.Der umlaufende Ringspalt zwischen dem Kragen und dem Aussengewindeabschnitt des Stativkopfes weist dabei eine radiale Erstreckung auf, die etwas grösser ist als die radiale Erstreckung der Überwurfmutter, so dass die Überwurfmutter mit ihrem den Innengewindeabschnitt aufweisenden Teil im umlaufenden Ringspalt des Stativkopfes Platz findet.

Zur Begrenzung der axialen Beweglichkeit der Überwurfmutter ist vorzugsweise ein radial wegstehender Anschlag vorgesehen. Bei diesem Anschlag handelt es sich beispielsweise. um einen elastisch nachgiebigen Ring, der in einer um das säulenförmige Mittelteil umlaufenden Rille angeordnet ist. Auf diese Weise ergibt sich eine unverlierbare Anordnung der Überwurfmutter am Mittelteil.

Als besonders vorteilhaft hat es sich erwiesen, wenn die stirnseitige Endfläche des Mittelteiles bzw. die Grundfläche des Stativkopfes jeweils mit einer Anzahl Erhebungen bzw. Einsenkungen ausgebildet sind, die entlang eines zur zentralen Längsmittelachse des Mittelteiles konzentrischen Kreises äquidistant beabstandet vorgesehen sind. Dabei sind die Erhebungen und die Einsenkungen vorzugsweise einander entsprechend kegelstumpfförmig ausgebildet. Durch eine solche Ausbildung der Erhebungen und Einsenkungen ergibt sich in vorteilhafter Weise eine Selbstzentrierung des Stativkopfes in Bezug zum Mittelteil, wobei diese beiden Teile um die zentrale Längsmittellinie herum in Winkelschritten verdreht und verdrehfest miteinander verbunden werden können.

Das Mittelteil weist vorzugsweise einen vom Zentrum seiner stirnseitigen Endfläche vorragenden Gewindezapfen mit einem Aussengewinde, der Stativkopf an seiner Unterseite eine Ausnehmung auf, wobei der lichte Innendurchmesser der Ausnehmung grösser ist als der Aussendurchmesser des Aussengewindes. Durch eine solche Ausbildung der Einrichtung ist es problemlos möglich, den Stativkopf mit seiner Grundfläche auf der stirnseitigen Endfläche des Mittelteiles anzuordnen, weil der von der stirnseitigen Endfläche vorragende Gewindezapfen im zusammengebauten Zustand der Einrichtung in der im Stativkopf vorgesehenen Ausnehmung Platz findet. Auf dem Mittelteil der erfindungsgemässen Einrichtung kann auch ein Stativkopf herkömmlicher Art befestigt werden, der nicht mit den Erhebungen entsprechenden Einsenkungen ausgebildet ist. Zu diesem Zweck ist es erforderlich, dass der von der stirnseitigen Endfläche des Mittelteiles vorragende Gewindezapfen mit seinem Aussengewindeabschnitt über die von der stirnseitigen Endfläche des Mittelteiles abgewandten Stirnflächen der Erhebungen mit einer bestimmten (-genormten) Länge übersteht. Beispielsweise kann das Aussengewinde des von der stirnseitigen Endfläche vorragenden Gewindezapfens des Mittelteiles als genormtes 1/4-Zoll-Gewinde ausgebildet sein.

Die Ausnehmung in der Grundfläche des Stativkopfes ist vorzugsweise mit einem Innengewinde versehen. Bei diesem Innengewinde kann es sich beispielsweise um ein genormtes 3/8-Zoll-Gewinde handeln. Bei einer solchen Ausbildung ist es möglich, mit dem beschriebenen Mittelteil einen beliebigen Stativkopf, bzw. mit dem beschriebenen Stativkopf ein beliebiges Mittelteil zu kombinieren. Der Aussengewindeabschnitt des von der stirnseitigen Endfläche des Mittelteiles vorragenden Gewindezapfens weist unabhängig davon, ob der Gewindezapfen mit oder ohne einen Bund ausgebildet ist, eine genormte axiale Länge auf.

Weitere Einzelheiten, Merkmale und Vorteile ergeben sich aus der nachfolgenden Beschreibung eines in der Zeichnung dargestellten Ausführungsbeispieles der Einrichtung zur verdrehsicheren Befestigung eines Stativkopfes am Mittelteil eines Statives. Es zeigt:

Fig. 1 eine halbseitig längsgeschnittene Darstellung der Einrichtung, wobei das Mittelteil nur abschnittweise gezeichnet ist, und

Fig. 2 eine Draufsicht auf das Mittelteil der Einrichtung.

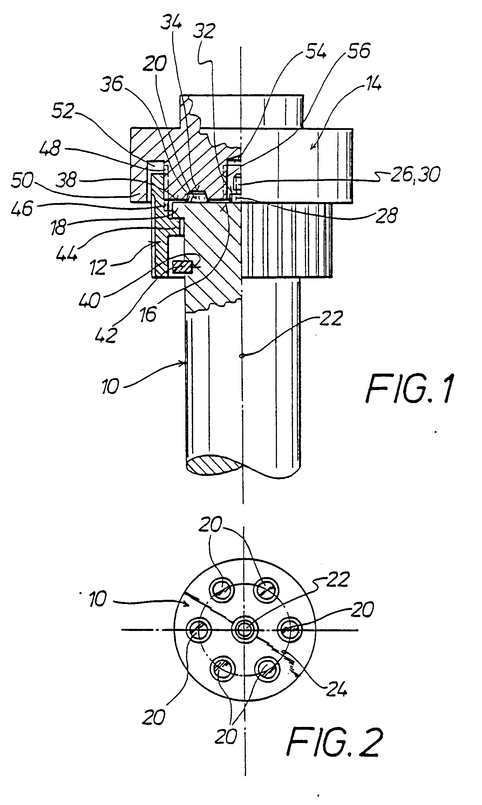

Fig. 1 zeigt ein abschnittweise dargestelltes, halbseitig längsgeschnittenes Mittelteil 10, das als Voll- oder Hohlkörper ausgebildet ist. Auf dem Mittelteil 10 ist mittels einer Überwurfmutter 12 ein Stativkopf 14 eines Statives verdrehsicher befestigt. Das Mittelteil 10 weist an seinem zu seiner stirnseitigen Endfläche 16 benachbarten Endabschnitt einen umlaufenden Bund 18 und von der stirnseitigen Endfläche vorragende Erhebungen 20 auf. Wie aus Fig. 2 ersichtlich ist, sind die Erhebungen 20 entlang eines zur zentralen Längsmittellinie 22 konzentrischen Kreises 24 äquidistant beabstandet angeordnet. Ausserdem steht vom Zentrum der stirnseitigen Endfläche 14 ein Gewindezapfen 26 vor, der mit einem Bund 28 und mit einem Aussengewindeabschnitt 30 ausgebildet ist. Der Bund 28 weist eine Auflagefläche 32 auf, die mit der vorderseitigen Stirnfläche 34 der einzelnen Erhebungen 20 in einer gemeinsamen Ebene liegt. Damit ist es möglich, auf dem Mittelteil 10 einen Stativkopf 14 zu befestigen, der nicht wie der in Fig. 1 dargestellte Stativkopf 14 mit den Erhebungen 20 entsprechenden Einsenkungen 36 in der Grundfläche 38 des Stativkopfes 14 ausgebildet ist.

Das Mittelteil 10, bei dem es sich beispielsweise. um die Mittelsäule eines an sich bekannten Statives handelt, weist in einem axialen Abstand vom umlaufenden Bund 18 eine umlaufende Rille 40 auf, in der ein elastisch nachgiebiger Anschlag 42 eingerastet ist. Bei diesem Anschlag 42 handelt es sich beispielsweise. um einen Ring aus einem Gummimaterial. Auf den als Ring ausgebildeten Anschlag 42 kann verzichtet werden, wenn das Mittelteil 10 im Anschluss an den umlaufenden Bund 18 mit einer um das Mittelteil 10 umlaufenden (nicht gezeichneten) Aussparung ausgebildet ist, die eine geeignete axiale Längserstreckung besitzt.

Die Überwurfmutter 12 ist mit einem radial nach innen ragenden umlaufenden Bund 44 versehen, dessen lichter Innendurchmesser kleiner ist als der Aussendurchmesser des Bundes 18 und des Anschlages 42. Durch den Bund 18 und den Anschlag 42 bzw. durch den Bund 44 ist die Überwurfmutter 12 in ihrer axialen Beweglichkeit begrenzt und auf dem Mittelteil 10 unverlierbar angeordnet. Die Überwurfmutter 12 ist mit einem Innengewindeabschnitt 46 und der Stativkopf 14 ist mit einem dem Innengewindeabschnitt 46 entsprechenden Aussengewindeabschnitt 48 ausgebildet. Ein umlaufender Kragen 50 umgibt den Aussengewindeabschnitt 48 des Stativkopfes 14 in einem bestimmten radialen Abstand, der etwas grösser ist als die radiale Abmessung der Wanddicke der Überwurfmutter 12 im Bereich ihres Innengewindeabschnittes 46. Zwischen dem Aussengewindeabschnitt 48 und dem Kragen 50 ist somit ein umlaufender Ringspalt 52 ausgebildet, in dem die Überwurfmutter 12 mit ihrem Innengewindeabschnitt 46 Platz findet, wenn mit Hilfe der Überwurfmutter 12 der Stativkopf 14 mit dem Mittelteil 10 mechanisch fest verbunden wird. Die Verdrehsicherung zwischen den beiden zuletzt genannten Teilen 10 und 14 wird dabei durch die Erhebungen 20 und die den Erhebungen 20 entsprechenden Einsenkungen 36 bewerkstelligt. Zur Selbstzentrierung zwischen dem Mittelteil 10 und dem Stativkopf 14 sind die Erhebungen 20 und die Einsenkungen 36, wie aus Fig. 1 ersichtlich ist, kegelstumpfförmig ausgebildet.

Der Stativkopf 14 ist ausgehend von seiner Grundfläche 38 mit einer zentralen Ausnehmung 54 ausgebildet, die mit einem Innengewindeabschnitt 56 versehen sein kann. Der Innengewindeabschnitt 56 kann bspw. als 3/8-Zoll-Innengewinde und der Gewindezapfen 26 bzw. der Aussengewindeabschnitt 30 des Gewindezapfens 26 des Mittelteiles 10 kann beispielsweise als 1/4-Zoll-Aussengewinde ausgebildet sein. Die axiale Länge des Gewindezapfens 26 entspricht einer Normlänge. Bei einer solchen Ausbildung der Einrichtung ist es beispielsweise möglich, auf dem Mittelteil 10 einen Stativkopf 14 mit einer Gewindeausnehmung festzuschrauben, deren Innengewindeabschnitt 56 dem Aussengewindeabschnitt 30 des Gewindezapfens 26 entspricht. Desgleichen ist es möglich, den Stativkopf 14 grossen Innengewindeabschnittes 56 auf einem entsprechenden Gewindezapfen 26 grossen Aussengewindes festzuschrauben. Ferner ist es möglich, einen Gewindezapfen 26 kleinen Aussengewindes mit einem Innengewindeabschnitt 56 grossen Durchmessers mittels einer ein entsprechendes Innengewinde und ein entsprechendes Aussengewinde aufweisenden Gewindehülse zu kombinieren.

**Patentansprüche**

1. Einrichtung zur verdrehsicheren Befestigung eines Stativkopfes (14) an einem Mittelteil (10) eines Statives, wobei der Stativkopf (14) im zusammengebauten Zustand mit seiner Grundfläche (38) auf einer stirnseitigen Endfläche (16) des Mittelteiles (10) anliegt und der Stativkopf (14) und das Mittelteil (10) mittels einer Überwurfmutter (12) miteinander verbind- und arretierbar sind, wobei die Überwurfmutter (12) die stirnseitige Endfläche (16) und die Grundfläche (38) umgreift und an einem der zu verbindenden Teile (10, 14) drehbar gelagert, sowie mit einem korrespondierenden Gewindeabschnitt (48) des anderen Teiles (14, 10) verschraubbar ist,
**dadurch gekennzeichnet,**
daß die stirnseitige Endfläche (16) des Mittelteiles (10) und die Grundfläche (38) des Stativkopfes (14) jeweils mit mindestens einer Erhebung (20) bzw. Einsenkung (36) ausgebildet sind, die mit Abstand von der Längsmittellinie (22) des Mittelteiles (10) angeordnet sind und im zusammengebauten Zustand ineinandergreifen.

2. Einrichtung nach Anspruch 1,
**dadurch gekennzeichnet,**
dass der Gewindeabschnitt (46) der Überwurfmutter (12) als Innengewindeabschnitt und der Gewindeabschnitt (48) des Stativkopfes (14) als Aussengewindeabschnitt ausgebildet sind.

3. Einrichtung nach Anspruch 2,
**dadurch gekennzeichnet,**
dass der Aussengewindeabschnitt (48) des Stativkopfes (14) durch einen umlaufenden Kragen (50) überdeckt ist, der vom Aussengewindeabschnitt (48) durch einen umlaufenden Ringspalt (52) beabstandet ist.

4. Einrichtung nach einem der vorhergehenden Ansprüche,
**dadurch gekennzeichnet,**
dass zur Begrenzung der axialen Beweglichkeit der Überwurfmutter (12) ein radial wegstehender Anschlag (42) vorgesehen ist.

5. Einrichtung nach einem der vorhergehenden Ansprüche,
**dadurch gekennzeichnet,**
dass die stirnseitige Endfläche (16) des Mittelteiles (10) bzw. die Grundfläche (38) des Stativkopfes (14) jeweils mit einer Anzahl Erhebungen (20) bzw. Einsenkungen (36) ausgebildet sind, die entlang eines zur zentralen Längsmittellinie (22) des Mittelteiles (10) konzentrischen Kreises (24) äquidistant beabstandet vorgesehen sind.

6. Einrichtung nach Anspruch 5,
**dadurch gekennzeichnet,**
dass die Erhebungen (20) und die Einsenkungen (36) einander entsprechend kegelstumpfförmig ausgebildet sind.

7. Einrichtung nach einem der vorhergehenden Ansprüche,
**dadurch gekennzeichnet,**
dass das Mittelteil (10) einen vom Zentrum seiner stirnseitigen Endfläche (16) vorragenden Gewindezapfen (26) mit einem Aussengewinde (30) und der Stativkopf (14) an seiner Grundfläche (38) eine Ausnehmung (54) aufweist, wobei der lichte Innendurchmesser der Ausnehmung (54) grösser ist als der Aussendurchmesser des Aussengewindes (30).

8. Einrichtung nach Anspruch 7,
**dadurch gekennzeichnet,**
dass die Ausnehmung (54) mit einem Innengewinde (56) versehen ist.

## Claims

1. A device for the anti-rotation mounting of a stand head (14) on a central part (10) of a stand, wherein the stand head (14) bears in its assembled state with its base surface (38) on a front end face (16) of the central part (10), and the stand head (14) and the central part (10) can be interconnected and locked by means of a coupling nut (12), wherein the coupling nut (12) surrounds the front end face (16) and base surface (38) and is rotatably mounted on one of the parts (10, 14) to be connected, and can be screwed together with a corresponding threaded section (48) of the other part (14, 10),
characterized in that
the front end face (16) of the central part (10) and the base surface (38) of the stand head (14) are respectively formed with at least one raised portion (20) or sunk portion (36) which are arranged at a distance from the longitudinal median line (22) of the central part (10) and engage in each other in their assembled state.

2. A device according to claim 1,
characterized in that
the threaded section (46) of the coupling nut (12) is formed as an internal threaded section and the threaded section (48) of the stand head (14) as an external threaded section.

3. A device according to claim 2,
characterized in that
the external threaded section (48) of the stand head (14) is covered by a surrounding collar (50) interspaced from the external threaded section (48) by means of a surrounding annular gap (52).

4. A device according to one of the preceding claims,
characterized in that
in order to limit the axial scope for movement of the coupling nut (12), provision is made for a radially projecting step (42).

5. A device according to one of the preceding claims,
characterized in that
the front end face (16) of the central part (10) and the base surface (38) of the stand head (14) are each formed with a number of raised portions (20) or sunk portions (36) respectively, which are provided equidistantly spaced along a circle (24) which is concentric with a longitudinal median line (22) of the central part (10).

6. A device according to claim 5,
characterized in that
the raised portions (20) and the sunk portions (36) have a frustoconical shape corresponding to each other.

7. A device according to one of the preceding claims,
characterized in that
the central part (10) has a threaded pin (26) projecting from the centre of its front end face (16) with an external thread (30), and the stand head (14) has on its base surface (38) a recess (54), the clear internal diameter of the recess (54) being larger than the external diameter of the external thread (30).

8. A device according to claim 7,
characterized in that
the recess (54) is provided with an internal thread (56).

## Revendications

1. Dispositif pour la fixation protégée contre la rotation de la tête d'un statif (14) sur l'élément central (10) de ce statif, du type dans lequel, à l'état assemblé, ladite tête (14) repose par sa face inférieure (38) sur une face frontale terminale (16) de l'élément (10), ladite tête (14) et ledit élément (10) pouvant être réunis et bloqués ensembles, au moyen d'un écrou à jupe (12), ledit écrou à jupe enveloppant ensemble ladite face terminale frontale (16) et la face inférieure (38) et étant monté pivotant par rapport à l'un des éléments (10, 14) ainsi que vissable avec un filetage correspondant (48) de l'autre élément (14, 10),
caractérisé en ce que
la face terminale frontale (16) de l'élément central (10) et la face inférieure de l'élément (38) de la tête (14) sont chacun réalisés avec au moins une saillie (20) et un creux (36) situés à une certaine distance de l'axe (22) de l'élément (10) et s'accouplent l'un avec l'autre à l'état réuni monté.

2. Dispositif selon la revendication 1,
caractérisé en ce que
les filets (46) de l'écrou à jupe (12) constituent un filetage intérieur et les filets (48) de la tête de statif (14) constituent un filetage extérieur.

3. Dispositif selon la revendication 2,

caractérisé en ce que

le filetage extérieur (48) de la tête de statif (14) est recouvert par une collerette circulaire (50) maintenue espacée du filetage extérieur (48) par une nervure circulaire (52).

4. Dispositif selon l'une quelconque des revendications précédentes,

caractérisé en ce que,

en vue de délimiter l'aptitude aux déplacements axiaux de l'écrou à jupe (12), il est prévu une butée faisant saillie radiale (42).

5. Dispositif selon l'une quelconque des revendications précédentes,

caractérisé en ce que

la face terminale frontale (16) de l'élément (10) et la face inférieure (38) de la tête de statif présentent respectivement un certain nombre de saillies (20) et le creux (36) réparti de manière équidistante le long d'un cercle concentrique (20) à l'axe central 22 de l'élément (10).

6. Dispositif selon la revendication 5,

caractérisé en ce que

les saillies (20) et les creux (36) sont de formes côniques, se correspondant mutuellement.

7. Dispositif selon l'une quelconque des revendications précédentes,

caractérisé en ce que

l'élément (10) présente un tenon fileté (26) comportant un filetage extérieur (30) et faisant saillie au centre de sa face terminale frontale (16), la tête de statif (14) présentant dans sa face inférieure un évidement (54) tel que le diamètre interne de cet évidement (54) soit supérieur au diamètre extérieur du filetage extérieur (30).

8. Dispositif selon la revendication 7,

caractérisé en ce que

l'évidement (54) présente un filetage intérieur (56).

FIG.1

FIG.2